# EUROPÄISCHE PATENTSCHRIFT

(11) **EP 3 650 277 B1**
(45) Veröffentlichungstag und Bekanntmachung des Hinweises auf die Patenterteilung: **16.06.2021**
(21) Anmeldenummer: 19208411.9
(22) Anmeldetag: 11.11.2019
(51) Int. Cl.: B60R 15/00

(54) **REISEMOBIL**
CAMPER VAN
AUTOCARAVANE

(30) Priorität: 12.11.2018 DE 102018128227
(43) Veröffentlichungstag der Anmeldung: 13.05.2020
(73) Patentinhaber: Hymer GmbH & Co. KG, 88339 Bad Waldsee (DE)
(72) Erfinder: Sawetzki, Bernhard, 88364 Wolfegg (DE); Dienstbier, Florian, 88339 Bad Waldsee (DE)
(74) Vertreter: Waller, Stefan

(56) Entgegenhaltungen:
- DE-A1-102010 004 356
- DE-U1-202012 100 897
- DE-U1-202014 007 358
- US-A- 3 565 480

## Beschreibung

Die Erfindung betrifft ein Reisemobil nach dem Oberbegriff des Anspruchs 1.

Reisemobile sind aus dem Stand der Technik bereits bekannt. Es ist hierbei auch bekannt, dass in Reisemobilen Frischwasser beispielweise zum Duschen verwendet wird. Das hierfür benötigte Frischwasser wird bekanntermaßen nach Verwendung als Abwasser in entsprechende Abwassertanks überführt. Zur Vermeidung von unangenehmen Gerüchen ist es bereits bekannt, Siphons zu verwenden, auch im Bereich von Reisemobilen. Ein Siphon kann im Sinne der Erfindung als Wasserablauf bzw. als Bestandteil des Wasserablaufs aufgefasst werden.

Die im Bereich von Reisemobilen gegenwärtig eingesetzten Siphons sind jedoch kompliziert, teilweise in verschiedenen Bodenbereichen, z.B. unter einem Sandwich-Boden, angeordnet, wodurch im Winter beispielsweise Frostschäden am Siphon auftreten können, die u.U. auch Schäden am Reisemobil verursachen können. Somit sind die gegenwärtig bei Reisemobilen verwendeten Wasserabläufe ungünstig im Hinblick auf etwaige Frostschäden. Gerade bei niedrigen Temperaturen, insbesondere bei Frost, kann es somit unter Umständen problematisch sein, den Siphon bzw. den Wasserablauf gefahrfrei zu verwenden, ohne entsprechende Energie zur Erwärmung des Siphons bzw. des Wasserablaufs einzusetzen.

Aufgabe der Erfindung ist es daher, ein Reisemobil mit verbessertem Wasserablauf und insbesondere mit verbesserter Siphon-Anordnung bereitzustellen.

Zur Lösung der Aufgabe wird ein Reisemobil vorgeschlagen, umfassend einen Wohnbereich und/oder Sanitärbereich, wobei der Wohnbereich und/oder der Sanitärbereich wenigstens abschnittsweise einen Laufboden umfasst, wobei der Laufboden wenigstens eine erste Öffnung im oberen Bodenabschnitt und eine mit dieser durch einen Kanal verbundene zweite Öffnung im unteren Bodenabschnitt für einen Ablauf und/oder Zulauf von Versorgungsmedien, insbesondere Wasser umfasst.

Erfindungsgemäß ist vorgesehen, dass der Kanal als Siphon ausgebildet ist und im Verlauf mindestens zwei aufeinanderfolgende gegenläufige Krümmungen aufweist sowie, dass der Siphon ausschließlich und gänzlich im Laufboden angeordnet ist. Hieraus resultiert der Vorteil, dass der Siphon gänzlich fern von frostempfindlichen Bereichen angeordnet ist und somit auch kein Energieeintrag zur etwaigen Erwärmung bei Frost erforderlich ist.

Im Sinne der Erfindung ist unter einem Laufboden eine oberste Bodenschicht im Reisemobil zu verstehen. Auf dem Laufboden sind Einbauten, wie Möbel, Duschen, etc. angeordnet.

Der Laufboden kann im Rahmen der Erfindung auch ein Bestandteil eines Sandwich-Doppelbodens sein.

In einer bevorzugten Ausgestaltung der Erfindung kann vorgesehen sein, dass der Siphon aus Kunststoff oder Metall gefertigt ist und wenigstens abschnittsweise rohrförmig ausgebildet ist.

Derartige Siphons sind besonders effizient hinsichtlich Geruchsvermeidung, besonders stabil und langlebig sowie kostengünstig herstellbar. Gerade bei einer Anordnung des Siphons im Laufboden ist eine hohe Stabilität besonders vorteilhaft, da aufwändige Reparaturarbeiten bzw. Austauscharbeiten des Siphons entfallen können.

Eine Weiterbildung der Erfindung kann vorsehen, dass der Laufboden und der Siphon wenigstens abschnittsweise einstückig ausgebildet sind.

Dies kann derart aufgefasst werden, dass der Siphon als integraler Bestandteil des Laufbodens ausgebildet und vorzugsweise innerhalb des Laufbodens angeordnet ist.

Derartige Siphons können besonders stabil und entsprechend langlebig ausgebildet werden.

Eine Weiterbildung der Erfindung kann vorsehen, dass der obere Bodenabschnitt und/oder der untere Bodenabschnitt wenigstens eine weitere Öffnung umfasst.

Hierdurch kann die Funktionalität des Laufbodens weiter erhöht werden.

In einer Weiterbildung der Erfindung kann vorgesehen sein, dass der Siphon drei aufeinanderfolgende gegenläufige Krümmungen aufweist. Ein solcher Siphon kann der Bildung unangenehmer Gase besonders effektiv entgegenwirken.

Die Erfindung kann in einer Ausgestaltung auch vorsehen, dass der Siphon als Einsetzteil ausgebildet ist, das einen im wenigstens abschnittsweise topfförmigen Bodenkörper und einen zumindest teilweise darauf anordenbaren Deckel umfasst. Ein derartiges Siphon, das als Einsetzteil ausgebildet ist, kann besonders einfach getauscht werden, beispielsweise zu Reinigungszwecken.

Nachstehend wir die Erfindung anhand von Zeichnungen näher erläutert. Hierbei zeigt:
- Fig. 1: eine stark vereinfachte schematische Darstellung eines Ausschnitts eines Laufbodens eines erfindungsgemäßen Reisemobils in einer ersten Ausführungsform,
- Fig. 2: eine stark vereinfachte schematische Darstellung eines Ausschnitts eines Laufbodens eines erfindungsgemäßen Reisemobils in einer weiteren Ausführungsform und
- Fig. 3: eine stark vereinfachte schematische Darstellung eines erfindungsgemäßen Reisemobils in einer Grundriss-Draufsicht-Ansicht.

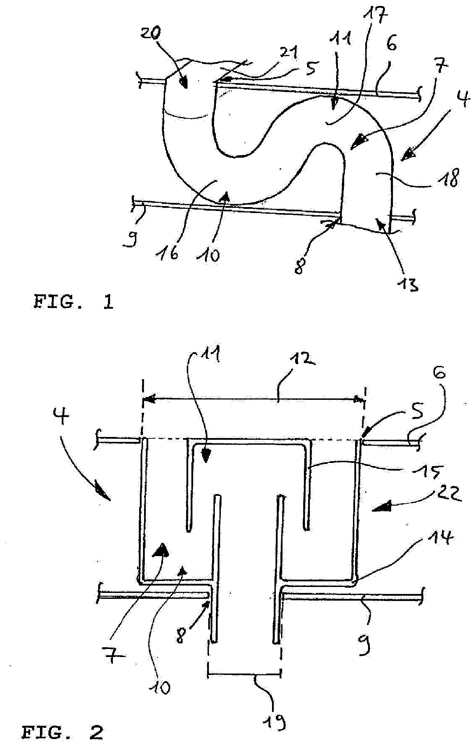

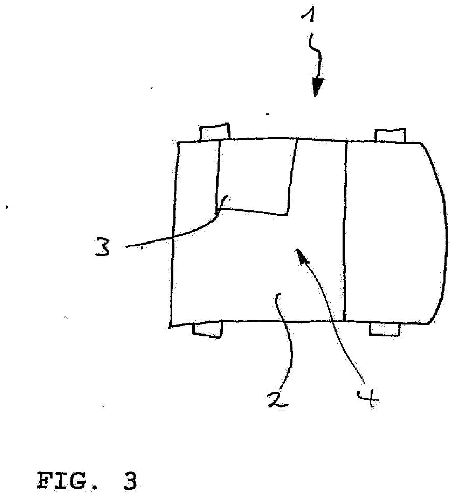

In der Fig. 1 ist in stark vereinfachter schematischer Darstellung ein Ausschnitt eines Laufbodens 4 eines erfindungsgemäßen Reisemobils (siehe Fig. 3) gezeigt. Das Reisemobil 1, das in Fig. 3 schematisch dargestellt ist, umfasst in bekannter Weise einen Wohnbereich 2 und einen Sanitärbereich 3. Vorliegend, jedoch nicht zwingend erforderlich, ist der Sanitärbereich 3 innerhalb des Wohnbereichs 2 angeordnet.

Das Reisemobil 1 umfasst in bekannter Weise weiterhin einen Laufboden 4, der z.B. vorstehend beschriebe Funktion einer Lauffläche bzw. einer Grundfläche zur Anordnung von Ausbauten wie Möbeln, etc. (nicht gezeigt), erfüllt.

Zur Vermeidung übler Gerüche, insbesondere durch ablaufendes Wasser, d.h. Abwasser, umfasst das Reisemobil 1 ein an sich bekanntes Siphon, beispielsweise in dem Sanitärbereich 3 (siehe Fig. 3).

Der Siphon ist gemäß Ausführungsform nach Fig. 1 als Kanal 7 mit zwei aufeinanderfolgenden gegenläufigen Krümmungen 10, 11 ausgestaltet.

Der Kanal 7 ist somit gemäß vorliegendem Ausführungsbeispiel n (Fig. 1) S-förmig ausgestaltet und umfasst mehrere Abschnitte 16, 17 und 18, wobei insbesondere die Abschnitte 16 und 17 in Bereichen unterschiedlicher Krümmung angeordnet sind.

Der Kanal 7 ist im Laufboden 4 angeordnet. Eine erste Öffnung 5 im oberen Bodenabschnitt 6 des Laufbodens 4 und eine zweite Öffnung 8 im unteren Bodenabschnitt 9 des Laufbodens werden durch den Kanal 7 miteinander verbunden.

Im Ausführungsbeispiel gemäß Fig. 1 kann Brauchwasser, das z.B. von einer Dusche stammt (nicht gezeigt), über einen Wassereinlauf 20 des Kanals 7 durch diesen hindurch aus einem Wasserablauf 13 aus dem Kanal 7 austreten, wobei der Kanal 7 mit seinen Krümmungen 10, 11 als Siphon in bekannter Weise üble Gerüche, z.B. durch aufsteigende Gase entstehend, unterbinden kann.

Wasser kann beispielsweise über eine Rinne 21, die z.B. als Bestandteil einer so genannten ebenen Dusche in einem Sanitärbereich angeordnet sein kann, in den Wassereinlauf 20 25 eintreten.

Der Wassereinlauf 20 kann als Anfangsbereich des Kanals 7 aufgefasst werden; der Wasserablauf 13 kann als Endbereich des Kanals 7 aufgefasst werden.

Bevorzugt ist, dass der Kanal vollständig im Laufboden 4 angeordnet ist.

In der Ausgestaltung der Erfindung gemäß Fig. 2 ist ersichtlich, dass der Siphon als Einsetzteil 22 ausgebildet sein kann, das einen im wenigstens abschnittsweise topfförmigen Bodenkörper 14 und einen teilweise darauf anordenbaren Deckel 15 umfasst. Dies kann auch derart aufgefasst werden, dass der Kanal durch zwei Bauteile gebildet wird, wobei ein erstes Bauteil von dem Bodenkörper 14 gebildet wird und ein zweites Bauteil von dem Deckel 15 gebildet wird.

Die Kombination von 14 und 15, die als Einsetzteil 22 aufgefasst werden kann, kann als Siphon bzw. als Kanal 7 angesehen werden, wobei der Kanal 7 in dem Laufboden 4 angeordnet ist. Der Kanal 7 weist zur Bereitstellung der Funktion eines Siphons aufeinanderfolgende gegenläufige Krümmungen 10, 11 auf.

Das Einsetzteil 22 ist im Laufboden 4 integrierbar und vorzugsweise lösbar im Laufboden 4 angeordnet.

Das Einsetzteil kann in nicht näher dargestellter Art und Weise ein oder mehrere Befestigungsmittel zur Befestigung im Laufboden umfassen, wobei das oder die Befestigungsmittel beispielsweise Gewinde oder als Flansch ausgebildet sein können.

Somit kann es möglich sein, dass das Einsetzteil im Laufboden kraft- und/oder formschlüssig im Laufboden befestigbar ist.

Es ist aus der Fig. 2 auch ersichtlich, dass Öffnungen 5, 8 im oberen Bodenabschnitt 6 bzw. unterem Bodenabschnitt 9 unterschiedliche Durchmesser aufweisen. So weist die Öffnung 5 unter Nichtberücksichtigung des Deckels 15 einen Durchmesser 12 auf, der größer ist als der Durchmesser 19 der Öffnung 8.

## Patentansprüche

1. Reisemobil, umfassend einen Wohnbereich (2) und/oder Sanitärbereich (3), wobei der Wohnbereich (2) und/oder der Sanitärbereich (3) wenigstens abschnittsweise einen Laufboden (4) umfasst, wobei der Laufboden (4) wenigstens eine erste Öffnung (5) im oberen Bodenabschnitt (6) und eine mit dieser durch einen Kanal (7) verbundene zweite Öffnung (8) im unteren Bodenabschnitt (9) für einen Ablauf und/oder Zulauf von Versorgungsmedien, insbesondere Wasser umfasst,
**dadurch gekennzeichnet,**
**dass** der Kanal (7) als Siphon ausgebildet ist und im Verlauf mindestens zwei aufeinanderfolgende gegenläufige Krümmungen (10, 11) aufweist,
wobei der Siphon ausschließlich und gänzlich im Laufboden angeordnet ist.

2. Reisemobil nach Anspruch 1,
**dadurch gekennzeichnet,**
**dass** der Siphon aus Kunststoff oder Metall gefertigt ist und wenigstens abschnittsweise rohrförmig ausgebildet ist.

3. Reisemobil nach Anspruch 1,
**dadurch gekennzeichnet,**
**dass** der Laufboden (4) und der Siphon wenigstens abschnittsweise einstückig ausgebildet sind.

4. Reisemobil nach einem der vorhergehenden Ansprüche,
**dadurch gekennzeichnet,**
**dass** der obere Bodenabschnitt (6) und/oder der untere Bodenabschnitt (9) wenigstens eine weitere Öffnung umfasst.

5. Reisemobil nach einem der vorhergehenden Ansprüche,
**dadurch gekennzeichnet,**
**dass** der Siphon drei aufeinanderfolgende gegenläufige Krümmungen (10, 11) aufweist.

6. Reisemobil nach einem der vorhergehenden Ansprüche,
**dadurch gekennzeichnet,**
**dass** der Siphon als Einsetzteil (22) ausgebildet ist, das einen im wenigstens abschnittsweise topfförmigen Bodenkörper (14) und einen zumindest teilweise darauf anordenbaren Deckel (15) umfasst.

## Claims

1. Motorhome comprising a living area (2) and/or sanitary area (3), wherein the living area (2) and/or the sanitary area (3) comprise(s), at least sectionally, a floor (4), wherein the floor (4) comprises at least one first opening (5) in the upper floor section (6) and one second opening (8), connected to said first opening by a channel (7), in the lower floor section (9) for discharge and/or feeding of supply media, in particular water,
**characterized**
**in that** the channel (7) is in the form of a siphon and has over its course at least two successive, oppositely running curves (10, 11), wherein the siphon is arranged exclusively and completely in the floor.

2. Motorhome according to Claim 1,
**characterized**
**in that** the siphon is manufactured from plastic or metal and is, at least sectionally, of tubular form.

3. Motorhome according to Claim 1,
**characterized**
**in that** the floor (4) and the siphon are, at least sectionally, formed integrally.

4. Motorhome according to one of the preceding claims,
**characterized**
**in that** the upper floor section (6) and/or the lower floor section (9) comprise(s) at least one further opening.

5. Motorhome according to one of the preceding claims,
**characterized**
**in that** the siphon has three successive, oppositely running curves (10, 11).

6. Motorhome according to one of the preceding claims,
**characterized**
**in that** the siphon is in the form of an insert part (22), comprising a floor body (14) which is, at least sectionally, of pot-shaped form and a cover (15) which can, at least partially, be arranged on said floor body.

## Revendications

1. Autocaravane, comprenant une pièce à vivre (2) et/ou une pièce sanitaire (3), la pièce à vivre (2) et/ou la pièce sanitaire (3) comprenant au moins en sections un plancher (4), le plancher (4) comprenant au moins une première ouverture (5) dans la section de plancher supérieure (6) et une deuxième ouverture (8), reliée à celle-ci par un canal (7), dans la section de plancher inférieure (9) pour une sortie et/ou une entrée de moyens d'alimentation, en particulier d'eau,
**caractérisée en ce que**
le canal (7) est configuré en tant que siphon et présente au moins deux courbures contrarotatives consécutives (10, 11) dans son étendue, le siphon étant agencé exclusivement et entièrement dans le plancher.

2. Autocaravane selon la revendication 1,
**caractérisée en ce que**
le siphon est fabriqué en matière plastique ou en métal et est configuré au moins en sections sous forme tubulaire.

3. Autocaravane selon la revendication 1,
**caractérisée en ce que**
le plancher (4) et le siphon sont configurés d'un seul tenant au moins en sections.

4. Autocaravane selon l'une quelconque des revendications précédentes,
**caractérisée en ce que**
la section de plancher supérieure (6) et/ou la section de plancher inférieure (9) comprennent au moins une ouverture supplémentaire.

5. Autocaravane selon l'une quelconque des revendications précédentes,
**caractérisée en ce que**
le siphon présente trois courbures contrarotatives consécutives (10, 11).

6. Autocaravane selon l'une quelconque des revendications précédentes,
**caractérisée en ce que**
le siphon est configuré en tant que partie d'insertion (22), qui comprend un corps de plancher (14) au moins en sections en forme de pot et un couvercle (15) pouvant au moins partiellement être agencé sur celui-ci.
